Europäisches Patentamt

European Patent Office

Office européen des brevets

(19)

(11) Publication number: **0 154 308**

**A2**

## (12) EUROPEAN PATENT APPLICATION

(21) Application number: 85102307.7

(51) Int. Cl.⁴: **A 23 G 9/28**

(22) Date of filing: 01.03.85

(30) Priority: 06.03.84 IT 2112084 U

(43) Date of publication of application:
11.09.85 Bulletin 85/37

(84) Designated Contracting States:
AT BE CH DE FR GB LI NL SE

(71) Applicant: DITTA CIPELLETTI ALBERTO
Via Emilia
I-20070 Guardamiglio (Milan)(IT)

(72) Inventor: Cipelletti, Alberto
Via Emilia
I-20070 Guardamiglio (Milan)(IT)

(74) Representative: Pipparelli, Claudio
c/o Centro di Consulenza in Proprietà Industriale Viale
Caldara 43
I-20122 Milano(IT)

(54) Sealing means for mixing-delivering taps in ice-cream machines.

(57) The invention relates to a sealing means for a mixing-delivering piston tap in machines for instant production of so-called "espresso" ice-cream, of the type comprising a cylindrical piston slidingly placed in a seat having a conjugate shape and provided with two O-rings which are placed, when the tap is closed, upstream and respectively downstream the outlet openings, in said seat, of ducts feeding ice-cream of different tastes from separate ice-cream mixing and producing cylinders, said O-rings being housed in annular grooves lying in planes perpendicular to the piston axis. In order to avoid any passage of ice-cream from one mixing and producing cylinder to the other one through the tap, a third groove is provided on the side wall of said piston, said groove extending along an ellipse defined by a plane intersecting said piston between said O-rings perpendicular to the piston axis, and forming an angle with the piston axis such that, when the piston is in its closed position, each of said outlet openings of ice-cream feeding ducts is completely contained in each one of the half-spaces defined by said plane, said groove being designed to receive a usual, commercially available O-ring.

Fig. 3

0154308

This invention generally relates to machines for instant production and distribution of so-called "espresso" ice-cream and, more in particular, to a sealing means for the mixing-delivering tap of said machines.

As it is known, the machines for the production and distribution of "espresso" ice-cream comprise one or more mixing cylinders, in each one of which ice-cream of different taste is prepared. Said cylinders are connected to the outside by means of closing and delivering taps, formed by a piston slidingly housed in a seat having a conjugate shape. Each piston is capable of closing and opening, by its axial motion under the control of a lever, a relevant delivering duct from the mixing cylinder concerned, through which the choosen ice-cream is delivered under pressure, in a known way.

Moreover, between the delivering taps of two adjacent cylinders, a third piston tap is generally foreseen, which tap, through appropriate ducts, is connected with said two ice-cream producing cylinders. When said third tap is opened, a simultaneous delivery from the two cylinders of a two-taste or mixed ice-cream takes place. Said third tap is called mixing-delivering tap.

For sealing the piston taps, they are provided with two 0-rings placed, when the piston is in its closed position, upstream and downstream the ice-cream supplying opening of each mixing cylinder.

This sealing system is sufficient and satisfactory for taps delivering one-taste ice-cream, in that said taps are

- 2 -

0154308

in communication with one duct only, but it is absolutely
insufficient in the case of the abovestated delivering
tap, which communicates with two ducts supplying ice-cream
of different taste. In fact, due to pressure differences
occurring in the production mixing cylinders during the
use, ice-cream infiltrations through the closed piston
and its seat may happen from one mixing cylinder to the
other, with the consequence that the one taste ice-cream
enters the cylinder of the other taste ice-cream, thus
jeopardizing the machine good operation.

As a precise coupling between the piston and its seat is
very difficult, in order to eliminate said ice-cream
infiltrations, a special sealing has already been
proposed, consisting of two axial spaced O-rings, such as
those which are usually provided in the delivering taps,
connected to one another in diametrally opposite points by
two straight sealing segments having such a length as to
cover the diameter of the openings of the ice-cream
supplying ducts to the mixing-delivering tap, said O-rings
and said straight sealing segments being housed in related
grooves provided for in the piston tap.

Though solving the problem of preventing ice-cream of one
taste from seeping into the duct or cylinder of ice-cream
of the other taste through the tap, said system has
however the drawback of requiring a complex sealing
element which needs a special manufacturing technique.

An object of the present invention is to eliminate this
drawback by providing a sealing means for mixing-delivering taps in machines for "espresso" ice-cream production and distribution, which avoids the above mentioned seepage of ice-cream from one mixing cylinder to the other, without using special sealing elements requiring an appropriate manufacturing technique and therefore very expensive.

More in particular, the invention relates to a sealing means for mixing-delivering taps in machines for instant production and distribution of "espresso" ice-cream, said taps being of the type comprising a cylindrical piston sliding in a seat having a conjugate shape and provided with two O-rings placed, when the tap is closed, in said seat upstream and downstream the outlet openings of ducts supplying ice-cream of different tastes, said rings being housed in grooves lying in planes perpendicular to the piston axis, characterized in that the piston is provided with a third groove extending along an ellipse as defined by the intersection of said piston with a plane lying between said O-rings perpendicular to the piston axis, and forming an angle to the piston axis such that, when said piston is in its closed position, each of the outlet openings of the ice-cream feeding ducts is completely positioned in each of the two half-spaces generated by said plane, said groove being designed to receive a usual commercially available O-ring.

With said piston configuration it is therefore possible to solve in a simple way and using usual O-rings, the problem of pneumatically separating from one another the two ducts feeding ice-cream of different taste. by simply placing the piston in its axial sliding seat with the ellipsoid groove oriented in a way that the opposite surfaces of said ellipse are in front of the two ice-cream supplying ducts.

In the accompanying drawings:

- figure 1 schematically shows a mixing-delivering tap in machines for the production and distribution of "espresso" ice cream according to the invention, in its open position:

- figure 2 schematically shows the same tap, but in its open position:

- figure 3 is a view, with detached pieces, of the piston according to the invention, partially in section, with the relevant O-rings: and

- figure 4 shows the piston housed in its seat and in its closed position.

The structure of a piston in a mixing-delivering tap is more clearly seen in figures 3 and 4. The piston, generally shown by the reference 10, comprises a cylindrical body 11 showing on its top a rod 13 connected to a control lever for causing its opening and closure motions, said lever being positioned in front of the machine and being not shown in the drawing. The piston 10 presents at each end of its cylindrical body 11 grooves 14 and 15 which are formed in a plane perpendicular to the piston axis, upstream and downstream of the openings 16 and 17 of ducts 18 and 19, respectively, which supply ice-

cream to the tap. Each groove 14 and 15 houses an O-ring, 20 and 21 respectively, which provide a sealing at each piston end to avoid that ice-cream seeps out of the tap piston cylindrical seat 12. So far the tap has the usual structure of delivering taps for one-taste ice-cream.

The characteristic of the piston according to the present invention is to provide, between said two grooves 14 and 15, a third groove 22 provided in the side wall of cylindric piston 11, along an ellipse defined by a plane P, intersecting said cylindrical body 11 of piston 10 between grooves 14 and 15, with such an angle in respect to the piston axis A that, when the piston is in its closed position (figure 4), the plane P forms two half-spaces wherein the openings 16 and 17, respectively, are completely contained. In other words, as shown in figure 4, the plane P passes upstream the opening 17 and downstream the opening 16 of ducts 19 and 18, respectively, without touching said openings.

This third groove 22 receives a usual commercially available O-ring 23. Of course, the piston 10 must be positioned in its seat 12 with the ellipsoid groove 23 oriented in such a way that the opposite surfaces of the ellipse are turned towards the relevant ducts 18 and 19 and said O-ring 23 is placed as illustrated in the drawing.

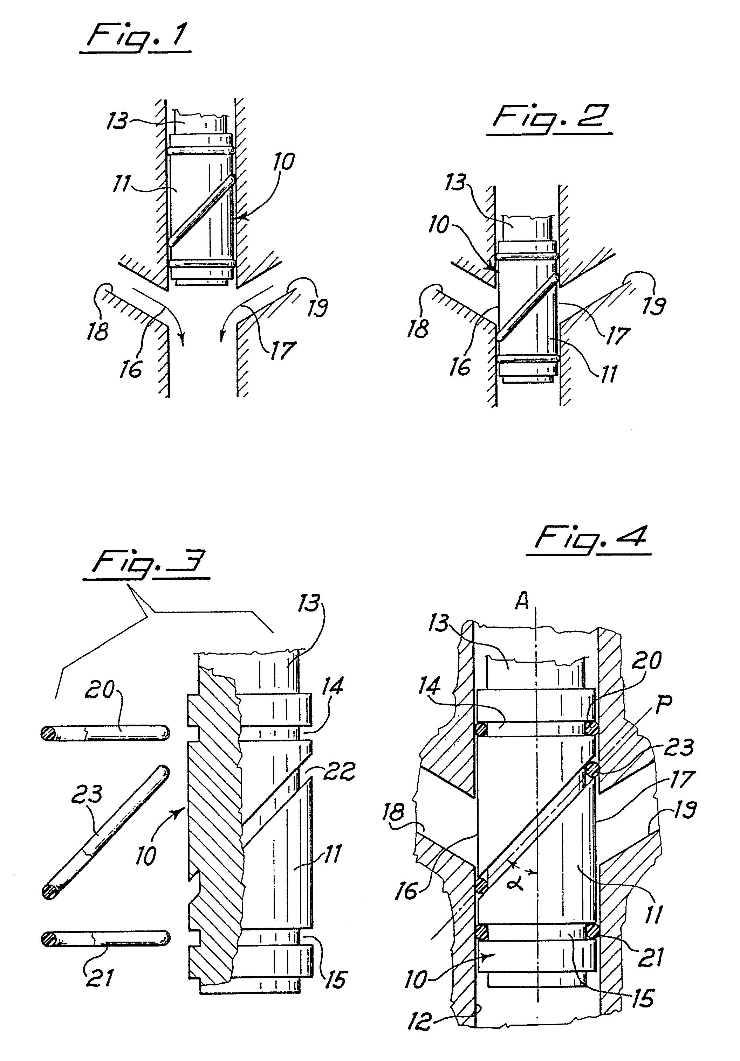

It can be easily noticed that, when the piston 10 is in its closed position (figures 2 and 4), the ice-cream of a first taste coming from duct 18 is sealingly separated from ice-cream of another taste coming from duct 19, by means of said O-ring 23, which actually separates the two ice-cream supplying ducts. When the piston 10 is in its open position (figure 1), the tap delivers ice-cream of two different tastes, as shown by the arrows.

The groove 22 of ellipsoid shape can be easily provided in the piston side surface by using numerically controlled machine tools or can be even more easily obtained by molding, in case the piston is made of a suitable plastic material.

From what above described it can be easily noticed that a sealing means for a mixing-delivering tap in a machine for the production and distribution of "espresso" ice-cream has been obtained, said means solving in an extremely simple way and with very reduced costs, the problem of separating in a perfect sealingly way the two ducts feeding ice-creams of different tastes, thus avoiding infiltration of one type ice-cream into the other one and, therefore, a unsatisfactory performance of the machine.

BAD. ORIGINAL

CLAIMS

1. - A sealing means for a mixing-delivering piston tap in machines for instant production of so-called "espresso" ice-cream, of the type comprising a cylindrical piston slidingly placed in a seat having a conjugate shape and provided with two O-rings which are placed, when the tap is closed, upstream and respectively downstream the outlet openings, in said seat, of ducts feeding ice-cream of different tastes from separate ice-cream mixing and producing cylinders, said O-rings being housed in annular grooves lying in planes perpendicular to the piston axis, characterized in that said piston has a third groove extending along an ellipse defined by a plane intersecting said piston between said O-rings perpendicular to the piston axis, and forming an angle with the piston axis such that, when the piston is in its closed position, each of said outlet openings of ice-cream feeding ducts is completely contained in each one of the half-spaces defined by said plane, said groove being designed to receive a usual, commercially available O-ring.

2. - A sealing means according to claim 1, wherein said piston is slidingly placed in its seat with said ellipsoid groove oriented in a such way that the opposite surfaces of the ellipse are each turned towards one ice-cream feeding duct to the tap.

3. - A sealing means according to claim 1, wherein said third groove is machined by means of a numerically

0154308

controlled machine tool.


4. - A sealing means according to claim 1, wherein said piston is made of a plastic material and said ellipsoid groove is formed by molding.

_Fig.1_

_Fig.2_

_Fig.3_

_Fig.4_